# EUROPEAN PATENT APPLICATION

(11) **EP 4 613 426 A1**
(43) Date of publication of application: **10.09.2025**
(21) Application number: 23885532.4
(22) Date of filing: 18.10.2023
(51) Int. Cl.: B24B 9/14, G02C 13/00

(54) **EYEGLASS LENS MACHINING DEVICE AND EYEGLASS LENS MACHINING PROGRAM**

(30) Priority: 02.11.2022 JP 2022176784
(71) Applicant: NIDEK CO., LTD., Gamagori-shi, Aichi 443-0038 (JP)
(72) Inventor: UCHIKADO Yuki, Gamagori-shi Aichi 443-0038 (JP); TSUKADA Hidetoshi, Gamagori-shi Aichi 443-0038 (JP); UEOKA Takamitsu, Gamagori-shi Aichi 443-0038 (JP)
(74) Representative: Hoefer & Partner Patentanwälte mbB
(86) International application number: PCT/JP2023/037679
(87) International publication number: WO 2024/095770

(57) **Abstract**

An eyeglasses lens machining device includes a period information acquisition unit that acquires period information indicating a predetermined period during which a consumable item is used in the eyeglasses lens machining device, a machining information acquisition unit that acquires machining information on machining of an eyeglasses lens by the eyeglasses lens machining device in the predetermined period, a recommendation information acquisition unit that acquires recommendation information for recommending replacement of the consumable item, a prediction unit that predicts a replacement time to replace the consumable item based on the period information acquired by the period information acquisition unit, the machining information acquired by the machining information acquisition unit, and the recommendation information acquired by the recommendation information acquisition unit, and an output unit that outputs a prediction result predicted by the prediction unit.

## Description

### TECHNICAL FIELD

The present disclosure relates to an eyeglasses lens machining device that machines a peripheral edge of an eyeglasses lens, and an eyeglasses lens machining program.

### BACKGROUND ART

An eyeglasses lens machining device for machining a peripheral edge of an eyeglasses lens is widely used in an eyeglasses store or the like. For example, the eyeglasses lens machining device holds an eyeglasses lens by mounting a lens holding shaft to a cup attached to the eyeglasses lens. Further, for example, the eyeglasses lens machining device can machine a peripheral edge of the held eyeglasses lens by a peripheral edge machining tool. Further, for example, the eyeglasses lens machining device can also form a hole in the held eyeglasses lens by a drilling tool (see Patent Literature 1).

### CITATION LIST

### PATENT LITERATURE

Patent Literature 1: JP2018-004930A

### SUMMARY OF INVENTION

### TECHNICAL PROBLEM

In the eyeglasses lens machining device, many consumable items (for example, a cup, a whetstone, and the like) are used. Currently, a user (for example, a worker, an administrator, or the like) estimates a replacement time of a consumable item based on experience in consideration of an operation status of the eyeglasses lens machining device, but it is difficult for the user to appropriately grasp the replacement time of the consumable item.

In view of the above problems, an object of the present disclosure is to provide an eyeglasses lens machining device and an eyeglasses lens machining program that enable a user to grasp an appropriate replacement time of a consumable item.

An eyeglasses lens machining device according to a first aspect of the present disclosure is an eyeglasses lens machining device that machines a peripheral edge of an eyeglasses lens, the eyeglasses lens machining device including: a period information acquisition unit configured to acquire period information indicating a predetermined period during which a consumable item is used in the eyeglasses lens machining device; a machining information acquisition unit configured to acquire machining information on machining of an eyeglasses lens by the eyeglasses lens machining device in the predetermined period; a recommendation information acquisition unit configured to acquire recommendation information for recommending replacement of the consumable item; a prediction unit configured to predict a replacement time to replace the consumable item based on the period information acquired by the period information acquisition unit, the machining information acquired by the machining information acquisition unit, and the recommendation information acquired by the recommendation information acquisition unit; and an output unit configured to output a prediction result predicted by the prediction unit.

An eyeglasses lens machining program according to a second aspect of the present disclosure is an eyeglasses lens machining program used in an eyeglasses lens machining device that machines a peripheral edge of an eyeglasses lens, the eyeglasses lens machining program causing the eyeglasses lens machining device, when executed by a processor of the eyeglasses lens machining device, to perform: a period information acquisition step of acquiring period information indicating a predetermined period during which a consumable item is used in the eyeglasses lens machining device; a machining information acquisition step of acquiring machining information on machining of an eyeglasses lens by the eyeglasses lens machining device in the predetermined period; a recommendation information acquisition step of acquiring recommendation information for recommending replacement of the consumable item; a prediction step of predicting a replacement time to replace the consumable item based on the period information acquired in the period information acquisition step, the machining information acquired in the machining information acquisition step, and the recommendation information acquired in the recommendation information acquisition step; and an output step of outputting a prediction result predicted in the prediction step.

### BRIEF DESCRIPTION OF DRAWINGS

[FIG. 1] FIG. 1 is a schematic configuration diagram of a machining mechanism of an eyeglasses lens machining device 1.
[FIG. 2] FIG. 2 is a block diagram showing an electrical configuration of the eyeglasses lens machining device 1.
[FIG. 3] FIG. 3 is an example of a date and time setting screen.
[FIG. 4] FIG. 4 is a flowchart showing an example of a machining process for a lens.
[FIG. 5] FIG. 5 is an example of a maintenance screen.
[FIG. 6] FIG. 6 is an example of the maintenance screen on which consumption degrees of consumable items are displayed.

### DESCRIPTION OF EMBODIMENTS

### <Overview>

An embodiment of an eyeglasses lens machining device according to the present embodiment will be described. Note that items classified in < > below may be used independently or in conjunction with each other.

The eyeglasses lens machining device according to the present embodiment is an eyeglasses lens machining device that machines a peripheral edge of an eyeglasses lens. For example, the eyeglasses lens machining device includes a machining tool and a machining drive unit. For example, the machining tool includes a peripheral edge machining tool that machines a peripheral edge of an eyeglasses lens. For example, the machining drive unit includes a peripheral edge machining drive unit that drives the peripheral edge machining tool. Of course, the eyeglasses lens machining device may include a machining tool different from the peripheral edge machining tool, and a machining drive unit different from the peripheral edge machining drive unit.

For example, the eyeglasses lens machining device includes a consumable item. For example, the consumable item is a member that is required to be replaced as a result of being used in the eyeglasses lens machining device. For example, the consumable item includes at least one of a cup attached to the eyeglasses lens, a lens presser for holding the eyeglasses lens, a machining tool for machining the eyeglasses lens, a machining drive unit (for example, various motors) for driving the machining tool, a deodorizing material of a deodorizing device connected to the eyeglasses lens machining device, and the like. For example, the machining tool may be at least one of a whetstone, a cutter, an end mill, and the like. For example, the deodorizing material may be at least one of a filter, a sheet, and the like.

The whetstone of the machining tool may include a plurality of whetstones. For example, the plurality of whetstones may be attached to a whetstone rotation shaft so as to be detachable one by one. Further, for example, the plurality of whetstones may be integrally formed and attached to the whetstone rotation shaft.

### <Period Information Acquisition Unit>

The eyeglasses lens machining device according to the present embodiment may include a period information acquisition unit (for example, CPU 2). The period information acquisition unit acquires period information indicating a predetermined period during which a consumable item is used in the eyeglasses lens machining device. For example, the predetermined period may be a predetermined period during which one consumable item is used in the eyeglasses lens machining device. In this case, the predetermined period may be a part of a period from when the use of the one consumable item is started until when the one consumable item is replaced. Further, in this case, the predetermined period may be the entire period from when the use of the one consumable item is started until when the one consumable item is replaced.

Further, for example, the predetermined period may be a predetermined period during which a plurality of consumable items of the same type are used in the eyeglasses lens machining device. That is, the predetermined period may be a period spanning a period during which a first consumable item is used and a period during which a second consumable item with which the first consumable item is replaced is used. In this case, the predetermined period may be a part of a period from when the use of the first consumable item is stated, to when the first consumable item is replaced with the second consumable item, and until when the second consumable item is further replaced. Further, in this case, the predetermined period may be the entire period from when the use of the first consumable item is stated, to when the first consumable item is replaced with the second consumable item, and until when the second consumable item is further replaced.

For example, the period information may be acquired in units of at least one of time point, time, date (at least one of day, month, year, and the like), week, and the like.

For example, the period information acquisition unit may acquire, as the period information, first period information indicating a first period for a consumable item being used in the eyeglasses lens machining device. For example, the first period may be a part or all of a period from when the use of the current consumable item in the eyeglasses lens machining device is started to a current time. As an example, the current time may be the current day (today) or the like. Further, for example, the first period may be a part or all of a period from when the use of the current consumable item in the eyeglasses lens machining device is started to a previous time. As an example, the previous time may be a previous day (yesterday) or the like. That is, a date different from the current time may be set.

For example, the period information acquisition unit may acquire, as the period information, second period information indicating a second period for a consumable item replaced in the past in the eyeglasses lens machining device. For example, the second period may be a part or all of a period from when the use of the past consumable item is started in the eyeglasses lens machining device until when the consumable item is replaced.

The period information acquisition unit may acquire at least one of the first period information and the second period information as the period information.

For example, in a case where the eyeglasses lens machining device includes a plurality of whetstones as the consumable items, the period information acquisition unit may acquire period information indicating a predetermined period for each whetstone during which the plurality of whetstones are used in the eyeglasses lens machining device. For example, a part or all of a period from when the use of a current whetstone is started until the current time or a previous time may be acquired for each whetstone. In addition, for example, a part or all of a period from when the use of a past whetstone is started until when the whetstone is replaced may be acquired for each whetstone.

### <Machining Information Acquisition Unit>

The eyeglasses lens machining device according to the present embodiment may include a machining information acquisition unit (for example, CPU 2). The machining information acquisition unit acquires machining information on machining of an eyeglasses lens by the eyeglasses lens machining device in the predetermined period. For example, the machining information may be information related to a use result of using a consumable item when the eyeglasses lens is machined in the predetermined period, and may be represented by at least one of information such as "number of eyeglasses lenses machined", "number of times of machining of eyeglasses lenses", and "number of times of using of consumable items" as an example. Further, for example, the machining information may be represented not in the direct numbers of eyeglasses lenses and consumable items, but in a period (time) during which the eyeglasses lenses are machined, a period (time) during which the consumable items are used, or the like.

In the present embodiment, the period information acquisition unit acquires the period information indicating the predetermined period, thereby acquiring the machining information corresponding to the period information. Further, in the present embodiment, the machining information acquisition unit acquires the machining information, thereby acquiring the period information corresponding to the machining information.

For example, the machining information acquisition unit may acquire, as the machining information, first machining information on machining of the eyeglasses lens in the first period. That is, for a consumable item being used in the eyeglasses lens machining device, the first machining information on the machining of the eyeglasses lens within the first period may be acquired. As a result, for example, the replacement time for replacing the currently used consumable item can be accurately predicted in consideration of the operation status of the currently used consumable item.

For example, the machining information acquisition unit may acquire, as the machining information, second machining information on machining of the eyeglasses lens in the second period. That is, for a consumable item that is replaced in the past in the eyeglasses lens machining device, the second machining information on the machining of the eyeglasses lens within the second period may be acquired. As a result, for example, it is possible to easily grasp the tendency of the replacement time of the consumable item in consideration of the operation status of the consumable item replaced in the past.

For example, in a case where the eyeglasses lens machining device includes a plurality of whetstones as the consumable items, the machining information acquisition unit may acquire machining information on machining of the eyeglasses lens with the plurality of whetstones in the predetermined period, which is machining information for each machining process of the eyeglasses lens. For example, a whetstone to be used varies depending on a machining process of machining an eyeglasses lens (for example, rough machining, finishing, chamfering, mirror finishing, or the like). Therefore, it is possible to easily acquire the machining information for each whetstone by acquiring the machining information for each machining process of the eyeglasses lens instead of simply acquiring the machining information of the eyeglasses lens.

### <Recommendation Information Acquisition Unit>

The eyeglasses lens machining device according to the present embodiment may include a recommendation information acquisition unit (for example, CPU 2). The recommendation information acquisition unit acquires recommendation information for recommending replacement of a consumable item of the eyeglasses lens machining device. For example, the recommendation information may be information serving as a guide for recommending replacement of a consumable item. For example, the recommendation information may be information indicating a guide for how long a consumable item can be used without problems. The recommendation information may be represented as a predetermined period during which the consumable item can be used, or may be represented as the number of times that the eyeglasses lens can be machined (or the number of eyeglasses lenses that can be machined).

As an example, the recommendation information may be information indicating a service life (or the number of times for service) of the consumable item due to deterioration over time or the like. In this case, the service life (the number of times for service) may be set as a fixed value in advance. Further, as an example, the recommendation information may be information indicating a limit period (or a limit number of times) based on a past use record or the like of the consumable item. In this case, the limit period (limit number of times) may be set to any value, or may be automatically updated when the consumable item is replaced.

For example, the recommendation information acquisition unit may acquire the recommendation information based on the second machining information acquired by the machining information acquisition unit. That is, the recommendation information acquisition unit may acquire the recommendation information based on the second machining information on the machining of the eyeglasses lens within the second period with the consumable item that is replaced in the past by the eyeglasses lens machining device. For example, in this case, the recommendation information acquisition unit may acquire, as the limit period (limit number of times) for the past consumable item, a limit period (limit number of times) during which the eyeglasses lens is machined from when the use of the past consumable item is started until when the eyeglasses lens can no longer be machined with the consumable item (that is, until the consumable item is replaced). For example, as described above, by using actual machining information of the consumable item to acquire the recommendation information for recommending the replacement of the consumable item, it is possible to predict the appropriate replacement time of the consumable item.

### <Prediction Unit>

The eyeglasses lens machining device according to the present embodiment may include a prediction unit (for example, CPU 2). The prediction unit predicts a replacement time to replace the consumable item based on the period information acquired by the period information acquisition unit, the machining information acquired by the machining information acquisition unit, and the recommendation information acquired by the recommendation information acquisition unit. For example, the replacement time may be a replacement time reflecting an operation status different for each eyeglasses lens machining device. For example, the replacement time may be a replacement time obtained based on actual usage information of the eyeglasses lens machining device (for example, an operation rate of the eyeglasses lens machining device). The replacement time may be represented in units of at least one of time point, time, date, week, and the like. For example, a table or a calculation formula for acquiring the replacement time of the consumable item may be stored in a storage unit based on an experiment or a simulation performed in advance.

For example, the prediction unit may directly predict the replacement time of the consumable item based on the period information, the machining information, and the recommendation information. Further, for example, the prediction unit may calculate the actual usage information indicating a record of using the consumable item based on the period information and the machining information, and predict the replacement time of the consumable item based on the actual usage information and the recommendation information. For example, the actual usage information of the consumable item may be information indicating a use frequency of the consumable item in a predetermined period. As an example of the information indicating the use frequency of the consumable item in the predetermined period, the actual usage information may be represented in terms of a use result of the consumable item per unit period. In this case, for example, the use result of the consumable item per unit period may be represented as at least one of information such as the number of times the consumable item is used per unit number of days, the number of times the consumable item is used per unit time, and the like. Further, as an example of the information indicating the use frequency of the consumable item in the predetermined period, the actual usage information may be represented in terms of the unit period per use result of the consumable item. In this case, for example, the unit period per use result of the consumable item may be represented as at least one of information such as the number of days required for one use of the consumable item, the time required for one use of the consumable item, and the like. The actual usage information may be represented as information different from the use result of the consumable item per unit period and the unit period per use result of the consumable item.

For example, the prediction unit may predict the replacement time of the consumable item by using the actual usage information and the recommendation information as described above. For example, in a case where the actual usage information is represented in terms of the use result of the consumable item per unit period and the recommendation information is represented as the period during which the consumable item can be used, by integrating the actual usage information and the recommendation information of the consumable item, it is possible to obtain a total number of times (number of pieces) that the consumable item can machine the eyeglasses lens from when the use of the consumable item is started until the period set as the recommendation information arrives. Further, for example, a remaining number of times (number of pieces) that the eyeglasses lens can be machined before the replacement of the consumable item is required may be obtained by comparing the number of times (number of pieces) that the eyeglasses lenses have been machined from when the use of the consumable item is started up to the present with the total number of times (number of pieces). The remaining number of times (number of pieces) that the eyeglasses lens can be machined may be converted into a period during which the remaining number of times that the eyeglasses lenses can be machined can be performed. For example, the replacement time of the consumable item may be predicted based on this.

Further, for example, in a case where the actual usage information is represented in terms of the use result of the consumable item per unit period and the recommendation information is represented as the number of times (number of pieces) that the consumable item can machine the eyeglasses lens, by dividing the recommendation information by the actual usage information of the consumable item, it is possible to obtain the entire period until the number of times of machining the eyeglasses lenses by the consumable item reaches the number of times (number of pieces) set as the recommendation information. Further, for example, the remaining period until the replacement of the consumable item is required may be obtained by comparing the period from when the use of the consumable item is started up to the present with the entire period. For example, the replacement time of the consumable item may be predicted based on this.

For example, in a case where the actual usage information is represented in terms of the unit period per use result of the consumable item and the recommendation information is represented as the period during which the consumable item can be used, by dividing the recommendation information by the actual usage information of the consumable item, it is possible to obtain a total number of times (number of pieces) that the consumable item can machine the eyeglasses lens from when the use of the consumable item is started until the period set as the recommendation information arrives. Further, for example, a remaining number of times (number of pieces) that the eyeglasses lens can be machined before the replacement of the consumable item is required may be obtained by comparing the number of times (number of pieces) that the eyeglasses lenses have been machined from when the use of the consumable item is started up to the present with the total number of times (number of pieces). The remaining number of times (number of pieces) that the eyeglasses lens can be machined may be converted into a period during which the remaining number of times that the eyeglasses lenses can be machined can be performed. For example, the replacement time of the consumable item may be predicted based on this.

Further, for example, in a case where the actual usage information is represented in terms of the unit period per use result of the consumable item and the recommendation information is represented as the number of times (number of pieces) that the consumable item can machine the eyeglasses lens, by integrating the actual usage information and the recommendation information of the consumable item, it is possible to obtain the entire period until the number of times of machining the eyeglasses lenses by the consumable item reaches the number of times (number of pieces) set as the recommendation information. Further, for example, the remaining period until the replacement of the consumable item is required may be obtained by comparing the period from when the use of the consumable item is started up to the present with the entire period. For example, the replacement time of the consumable item may be predicted based on this.

In the above description, the replacement time of the consumable item is predicted by performing integration or division using the actual usage information and the recommendation information of the consumable item, but the present disclosure is not limited thereto. For example, any configuration may be used as long as the replacement time of the consumable item can be calculated using the actual usage information and the recommendation information of the consumable item.

For example, the prediction unit may predict, based on the second period information, the second machining information, the recommendation information, and at least one of the first period information or the first machining information, the replacement time in consideration of the actual usage information of the consumable item replaced in the past in the eyeglasses lens machining device. For example, the prediction unit may predict the replacement time of the current consumable item based on the recommendation information, the actual usage information of the past consumable item based on the second period information and the second machining information, and at least one of the first period information and the first machining information. That is, the replacement time of the current consumable item may be predicted based on the tendency of the actual period information and the machining information of the past consumable item.

More specifically, for example, by using at least one of the first period information or the first machining information of the consumable item currently being use and referring to the actual usage information for the consumable item replaced in the past, it is possible to grasp whether the use frequency of the consumable item currently being use is higher than, lower than, or about the same as the use frequency of the consumable item in the past. Therefore, the replacement time of the current consumable item may be predicted using the actual usage information of the past consumable item and recommendation information. As a result, the replacement time for replacing the currently used consumable item can be accurately predicted in consideration of the operation status of the consumable item replaced in the past.

Further, for example, in a case where the actual usage information is represented in terms of the use result of the consumable item per unit period and the recommendation information is represented as the period during which the consumable item can be used, by integrating the actual usage information of the past consumable item and the recommendation information, it is possible to obtain a total number of times (number of pieces) that the current consumable item can machine the eyeglasses lens from when the use of the current consumable item is started until the period set as the recommendation information arrives. Further, for example, a remaining number of times (number of pieces) that the eyeglasses lens can be machined before the replacement of the current consumable item is required may be obtained by comparing the number of times (number of pieces) that the eyeglasses lenses have been machined from when the use of the current consumable item is started up to the current time with the total number of times (number of pieces). The remaining number of times (number of pieces) that the eyeglasses lens can be machined may be converted into a period during which the remaining number of times that the eyeglasses lenses can be machined can be performed. For example, the replacement time of the current consumable item may be predicted based on this.

Further, for example, in a case where the actual usage information is represented in terms of the use result of the consumable item per unit period and the recommendation information is represented as the number of times (number of pieces) that the consumable item can machine the eyeglasses lens, by dividing the recommendation information by the actual usage information of the past consumable item, it is possible to obtain the entire period until the number of times of machining the eyeglasses lenses by the current consumable item reaches the number of times (number of pieces) set as the recommendation information. Further, for example, the remaining period until the replacement of the current consumable item is required may be obtained by comparing the period from when the use of the current consumable item is started up to the current time with the entire period. For example, the replacement time of the current consumable item may be predicted based on this.

Further, for example, in a case where the actual usage information is represented in terms of the unit period per use result of the consumable item and the recommendation information is represented as the period during which the consumable item can be used, by dividing the recommendation information by the actual usage information of the past consumable item, it is possible to obtain a total number of times (number of pieces) that the current consumable item can machine the eyeglasses lens from when the use of the current consumable item is started until the period set as the recommendation information arrives. Further, for example, a remaining number of times (number of pieces) that the eyeglasses lens can be machined before the replacement of the current consumable item is required may be obtained by comparing the number of times (number of pieces) that the eyeglasses lenses have been machined from when the use of the current consumable item is started up to the current time with the total number of times (number of pieces). The remaining number of times (number of pieces) that the eyeglasses lens can be machined may be converted into a period during which the remaining number of times that the eyeglasses lenses can be machined can be performed. For example, the replacement time of the current consumable item may be predicted based on this.

Further, for example, in a case where the actual usage information is represented in terms of the unit period per use result of the consumable item and the recommendation information is represented as the number of times (number of pieces) that the consumable item can machine the eyeglasses lens, by integrating the actual usage information of the past consumable item and the recommendation information, it is possible to obtain the entire period until the number of times of machining the eyeglasses lenses by the current consumable item reaches the number of times (number of pieces) set as the recommendation information. Further, for example, the remaining period until the replacement of the current consumable item is required may be obtained by comparing the period from when the use of the current consumable item is started up to the current time with the entire period. For example, the replacement time of the current consumable item may be predicted based on this.

For example, in a case where the eyeglasses lens machining device includes a plurality of whetstones as the consumable items, the prediction unit may predict the replacement time for each whetstone based on the period information of each whetstone, the machining information of each whetstone, and the recommendation information. Accordingly, it is possible to easily acquire the replacement time of each whetstone based on the operation status of each whetstone. Among the plurality of whetstones, the more frequently used one is predicted to be replaced sooner. Therefore, for example, in a case where a plurality of whetstones are integrally formed, the same whetstone (whetstone group) can be used for a long period of time by, for example, limiting the use of whetstones whose replacement time is early as much as possible. In addition, for example, in a case where a plurality of whetstones can be individually replaced, it is possible to prepare for future replacement of the whetstones by preparing a spare whetstone in advance for those with early replacement time.

### <Output Unit>

The eyeglasses lens machining device according to the present embodiment may include an output unit (for example, CPU 2). The output unit outputs a prediction result predicted by the prediction unit. For example, the output unit outputs the replacement time of the consumable item predicted by the prediction unit as the prediction result. For example, the prediction result may be configured to indicate the replacement time in consideration of the operation status of the consumable item to the user. As an example, the prediction result may be represented as the entire period from when the use of the consumable item is started until when the replacement is required. In addition, as an example, the prediction result may be represented as a remaining period from the current time until when the replacement is required (that is, a period obtained by subtracting a period from when the use of the consumable item is started until the current time from the entire period). Of course, a period other than the entire period or the remaining period may be represented. As a result, the user can easily grasp an appropriate replacement time of the consumable item, prepare a spare consumable item in advance, and adjust the operating status of the device.

For example, the output unit may be configured to control a display unit to display the prediction result on the display unit. Further, for example, the output unit may be configured to control a sound generation unit (as an example, a speaker) to cause the sound generation unit to generate the prediction result as a sound. Further, for example, the output unit may be configured to control a notification unit (as an example, a lamp) to indicate the prediction result by lighting or blinking the notification unit. Further, for example, the output unit may be configured to control a printing unit (as an example, a printer) to cause the printing unit to print the prediction result. Further, for example, the output unit may be configured to control an external storage unit (as an example, a memory or a server) and transmit the prediction result to the external storage unit. Of course, for example, the output unit may be configured to perform a combination of these controls or may perform a control different from these controls.

When the output unit controls the display unit, the output unit may display a message on the display unit as the prediction result. Further, for example, the output unit may indicate the prediction result by emphasizing a screen of the display unit. As an example, at least one of inversion or change of the color of the screen, flashing of a screen, change of a display size, and the like may be used. For example, the output unit may be configured to indicate the prediction result by displaying a sign (for example, at least one of a window, a mark, an icon, a character, a number, and a symbol) on the display unit. Of course, for example, the output unit may further emphasize such a sign.

The present disclosure is not limited to the device described in the present embodiment. For example, terminal control software (a program) that performs functions of the above-described embodiment may be supplied to a device or a system via a network or various storage media, and a control device (for example, a CPU or the like) of the device or the system may read and execute the program.

### <Example>

An example of the eyeglasses lens machining device according to the present embodiment will be described. An eyeglasses lens machining device 1 according to the example machines a lens LE and processes various types of information related to the eyeglasses lens machining device 1 itself. That is, the eyeglasses lens machining device 1 according to the example also serves as an information machining device that processes information related to the eyeglasses lens machining device 1. Alternatively, a device (for example, a personal computer, a server, a mobile terminal, or a smartphone) other than the eyeglasses lens machining device 1 may be used as the information machining device.

### <Configuration of Device>

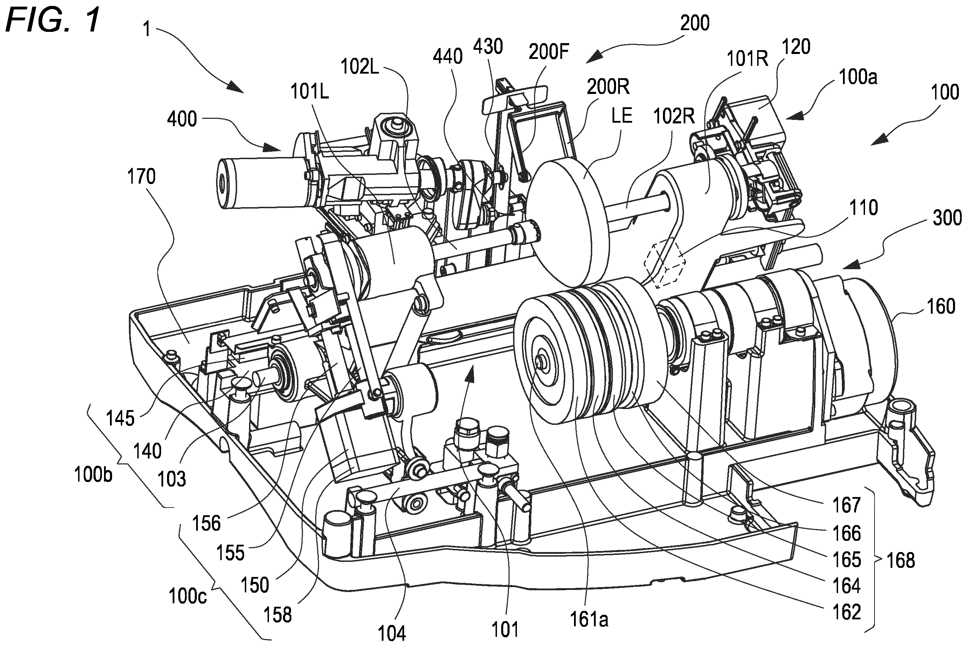

FIG. 1 is a schematic configuration diagram of a machining mechanism of the eyeglasses lens machining device 1. The eyeglasses lens machining device 1 includes a lens holding unit 100, a lens shape measuring unit 200, a first machining tool unit 300, and a second machining tool unit 400. The lens holding unit 100 includes lens holding shafts (lens chuck shafts) 102R and 102L that sandwich and hold the lens LE. The lens holding unit 100 further includes a lens rotation unit 100a, a holding shaft moving unit 100b, and a shaft distance changing unit 100c.

The lens rotation unit 100a rotates the pair of lens holding shafts 102R and 102L around an axis. The holding shaft moving unit 100b moves the lens holding shafts 102R and 102L in an axial direction (X direction). The shaft distance changing unit 100c moves the lens holding shafts 102R and 102L in a direction (referred to as a Y direction) in which the lens holding shafts 102R and 102L approach or separate from a rotation axis of a machining tool (details will be described later) provided on each of the first machining tool unit 300 and the second machining tool unit 400. The shaft distance changing unit 100c changes a distance between the lens shape measuring unit 200 and the lens holding shafts 102R and 102L.

Hereinafter, a specific example of each configuration in the eyeglasses lens machining device 1 will be described in detail. The lens holding unit 100 is mounted on a base 170 of a main body of the eyeglasses lens machining device 1.

The lens rotation unit 100a will be described. The lens holding shaft 102R and the lens holding shaft 102L are rotatably and coaxially held by a right arm 101R and a left arm 101L of a carriage 101 of the lens holding unit 100, respectively. When the lens holding shaft 102R is moved toward the lens holding shaft 102L by a motor 110 attached to the right arm 101R, the lens LE is sandwiched and held between the two lens holding shafts 102R and 102L. The two lens holding shafts 102R and 102L are synchronously rotated by a motor 120 attached to the right arm 101R. In this example, a cup is attached to a predetermined position of the lens LE. One of the lens holding shafts 102R and 102L is attached to the cup attached to the lens LE.

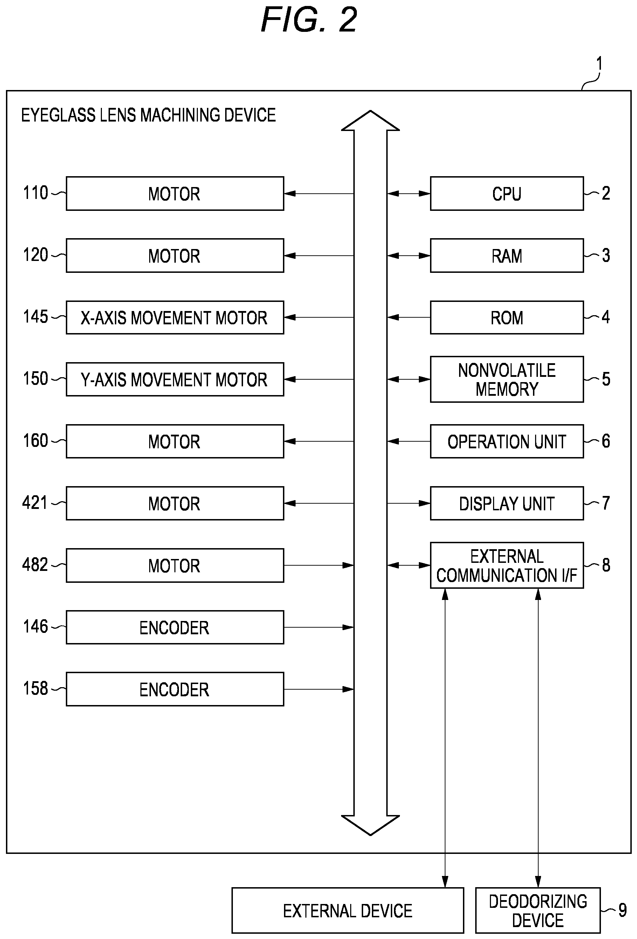

The holding shaft moving unit 100b will be described. An X-axis movement support base 140 is provided on shafts 103 and 104 that extend parallel to the lens holding shafts 102R and 102L and a whetstone rotation shaft 161a. The X-axis movement support base 140 can move in an X-axis direction along the shafts 103 and 104 by power of an X-axis movement motor 145. The carriage 101 is mounted on the X-axis movement support base 140. An encoder 146 (see FIG. 2) is provided on a rotation shaft of the X-axis movement motor 145. In this example, positions of the lens holding shafts 102R and 102L in the X direction detected by the encoder 146 are used to measure shapes of a front surface and a rear surface of the lens LE.

The shaft distance changing unit 100c will be described. A shaft 156 extending in a direction connecting the lens holding shafts 102R and 102L and the whetstone rotation shaft 161a is fixed to the X-axis movement support base 140. When a Y-axis movement motor 150 rotates, a ball screw 155 extending in the Y direction rotates. As a result, the carriage 101 moves in a Y-axis direction along the shaft 156. An encoder 158 that detects a position of the carriage 101 in the Y direction is provided on a rotation shaft of the Y-axis movement motor 150.

The lens shape measuring unit 200 will be described. The lens shape measuring unit 200 according to the example is fixed to the base 170 at a position opposite to the first machining tool unit 300 via the carriage 101. The lens shape measuring unit 200 includes a lens edge position measuring portion 200F and a lens edge position measuring portion 200R. The lens edge position measuring portion 200F includes a tracing stylus that is brought into contact with a front surface of the lens LE. The lens edge position measuring portion 200R includes a tracing stylus that comes into contact with a rear surface of the lens LE. The edge positions of the front surface and the rear surface of the lens LE are measured at the same time by moving the carriage 101 in the Y-axis direction and rotating the lens holding shafts 102R and 102L based on target lens shape data in a state where the respective tracing styli of the lens edge position measuring portions 200F and 200R are in contact with the front surface and the rear surface of the lens LE. As the configuration of the lens edge position measuring portions 200F and 200R, for example, the configuration described in JP2003-145328A may be used.

The first machining tool unit 300 will be described. The first machining tool unit 300 includes a peripheral edge machining tool 168 which is one of lens machining tools. The peripheral edge machining tool 168 of the example includes a glass rough whetstone 162, a finishing whetstone 164 having a flat machining surface and a V groove (bevel groove) for forming a bevel on a lens, a flat mirror finishing whetstone 165, a finishing whetstone 166 for a sharp curve lens, a plastic rough whetstone 167, and the like. The plurality of whetstones of the peripheral edge machining tool 168 are coaxially attached to the whetstone rotation shaft (whetstone spindle) 161a. The whetstone rotation shaft 161a is rotated by a motor (peripheral edge machining drive unit) 160. The peripheral edge of the lens LE held by the lens holding shafts 102L and 102R is pressed against the peripheral edge machining tool 168 and machined.

The second machining tool unit 400 will be described. The second machining tool unit 400 includes a finishing tool, a drilling tool, a motor 421, a motor 471, and the like. The finishing tool rotates about the rotation axis to perform finishing on the peripheral edge of the lens LE (for example, at least one of groove drilling, bevel forming, and step forming). The drilling tool forms a hole in the lens LE. The drilling tool according to the example forms a hole extending in the axial direction in the lens LE by moving in the axial direction while rotating about the rotation axis. The motor 421 rotates the finishing tool and the drilling tool. The motor 471 turns the finishing tool and the drilling tool.

### <Control Unit>

FIG. 2 is a schematic configuration diagram of a control system of the eyeglasses lens machining device (information machining device) 1. The eyeglasses lens machining device 1 includes a CPU (processor) 2 that controls the eyeglasses lens machining device 1. The CPU 2 is connected to RAM 3, ROM 4, a nonvolatile memory 5 (hereinafter, memory 5), an operation unit 6, a display unit (display) 7, and an external communication I/F 8 via a bus. Further, various devices such as the above-described motors (the motor 110, the motor 120, the X-axis movement motor 145, the Y-axis movement motor 150, the motor 160, the motor 421, the motor 471, the encoder 146, and the encoder 158) are connected to the CPU 2 via a bus.

The RAM 3 temporarily stores various kinds of information. The ROM 4 stores various programs, initial values, and the like. The memory 5 is a non-transitory storage medium (for example, a flash ROM, a hard disk drive, or the like) capable of holding stored contents even when power supply is cut off. The memory 5 may store a control program (for example, an eyeglasses lens machining information processing program) for controlling the operation of the eyeglasses lens machining device (information machining device) 1. The operation unit 6 receives input of various instructions from an operator. For example, a touch panel provided on a surface of the display unit 7 or an operation button may be used as the operation unit 6. The display unit 7 can display various types of information such as the shape of the lens LE and a shape of a frame. Further, the eyeglasses lens machining device 1 can cause the display unit 7 to display (output) a predicted replacement time to be described later. The external communication I/F 8 connects the eyeglasses lens machining device 1 to an external device.

The eyeglasses lens machining device 1 according to the example is connected to a deodorizing device 9 via the external communication I/F 8. The deodorizing device 9 operates a deodorizing function in conjunction with a machining operation by the eyeglasses lens machining device 1 (specifically, a machining operation by the peripheral edge machining tool 168). The deodorizing device 9 is provided with an activated carbon material for deodorizing. A deodorizing effect of the activated carbon material decreases depending on an operating time of the deodorizing function. When the deodorizing effect of the activated carbon material decreases, the user is required to replace the activated carbon material with a new one.

### <Control Operation>

A control operation in the eyeglasses lens machining device 1 having the above configuration will be described.

### <Setting of Use Start Date>

The eyeglasses lens machining device 1 according to the example includes a plurality of consumable items. As an example, the consumable item may be at least one of the peripheral edge machining tool 168 (that is, the glass rough whetstone 162, the finishing whetstone 164, the flat mirror finishing whetstone 165, the finishing whetstone 166, the plastic rough whetstone 167, and the like) of the first machining tool unit 300, the finishing tool and the drilling tool of the second machining tool unit 400, the cup, the motor 160 of the first machining tool unit 300, the activated carbon material of the deodorizing device 9, and the like.

For example, the user of the eyeglasses lens machining device 1 sets a use start date for these consumable items. For example, the user operates the display unit 7 of the eyeglasses lens machining device 1 and operates a button for setting a use start date of a consumable item (a use start date field in a consumable item list 510 described later). For example, the CPU 2 displays a date and time setting screen 520 on the display unit 7 based on an input signal from the display unit 7. For example, the use start date of the consumable items may be a date and time when a consumable item is used for the first time, a date and time when a consumable item is replaced, or the like.

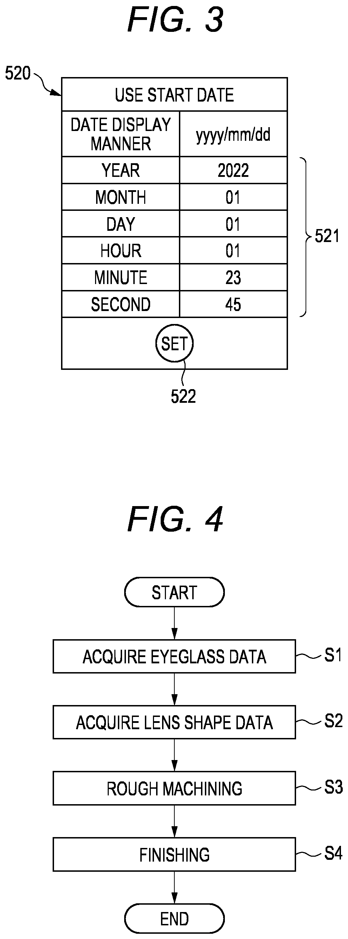

FIG. 3 is an example of the date and time setting screen 520. For example, the date and time setting screen 520 includes setting item buttons 521 and a date and time setting button 522. The setting item buttons 521 are buttons for each unit for designating the use start date of a consumable item. For example, the setting item buttons 521 are provided for at least one of units such as year, month, day, hour, minute, and second. The date and time setting button 522 is a button for setting a use start date of the consumable item. In other words, this button is used to confirm the use start date designated by the setting item buttons 521.

For example, the user operates the setting item button 521 on the date and time setting screen 520. For example, when the unit field of each setting item button 521 is pressed, a numeric keypad is displayed as a pop-up. For example, the user inputs a number corresponding to each unit using the numeric keypad. As a result, the use start date for each consumable item can be input. For example, when the input of the use start date of the consumable item is completed, the user operates the date and time setting button 522. For example, the CPU 2 sets (confirms) the use start date of each consumable item based on an input signal from the date and time setting button 522, and stores the use start date in the memory 5.

For example, the use start date of the consumable item may be automatically set by a timing mechanism (for example, a calendar timer) (not illustrated) provided in the eyeglasses lens machining device 1. For example, in this case, the eyeglasses lens machining device 1 may include a date and time acquisition button for acquiring the current date and time. The CPU 2 may automatically set the use start date based on an input signal from the date and time acquisition button.

### <Recording of Machining Information>

For example, the user machines the lens LE after setting the use start date of the consumable items in the eyeglasses lens machining device 1. For example, the user measures a demo lens (or template) that has been fitted in an eyeglass frame in advance using the lens shape measuring unit 200, and stores external shape data of the demo lens in the memory 5 as the target lens shape of the lens LE.

Further, for example, the user inputs, via the display unit 7, layout data indicating a positional relationship between an optical center of the lens LE and the target lens shape data, and machining conditions of the lens LE. As an example, the layout data may be at least one of a distance between the geometric centers of left and right target lens shape data, a height distance of the optical center position with respect to the geometric center position of the target lens shape data, a pupillary distance of an eyeglass wearer, and the like. Further, as an example, the machining conditions may be at least one of a type of the eyeglass frame, a material of the lens LE, a machining type of the lens LE (bevel machining, plano-processing, groove drilling, or the like), the presence or absence of mirror finishing, the presence or absence of chamfering, or the like. Here, a case where the lens LE is made of plastic and bevel machining is performed will be described as an example.

Further, for example, when a cup is attached to the lens LE and the lens LE is sandwiched between the lens holding shafts 102R and 102L, the user operates a machining start button (not shown) for starting machining of the lens LE. Based on a machining start signal from the machining start button, the CPU 2 causes the memory 5 to store that the lens LE has been machined once. Further, the CPU 2 causes the peripheral edge machining tool 168 to machine a peripheral edge of the lens LE according to the flowchart of FIG. 4 in response to the machining start signal from the machining start button.

FIG. 4 is a flowchart showing an example of a machining process of the lens LE. First, the CPU 2 acquires eyeglass data of the lens LE (S1). For example, the eyeglass data of the lens LE is the target lens shape data, the layout data, and the like. For example, the CPU 2 retrieves the target lens shape data and the layout data from the memory 5 to obtain the data.

Next, the CPU 2 acquires lens shape data of the lens LE (S2). For example, the lens shape data of the lens LE is position information corresponding to the target lens shape data on a front refractive surface and a rear refractive surface of the lens LE, curve information on the front refractive surface of the lens LE, a thickness of the edge of the lens LE, and the like. For example, the CPU 2 brings the lens LE into contact with the lens edge position measuring portions 200F and 200R of the lens shape measuring unit 200, and controls the movement of the carriage 101 and the rotation of the lens holding shafts 102R and 102L based on the target lens shape data. For example, the lens shape data on the front refractive surface and the rear refractive surface of the lens LE is thereby acquired.

Next, the CPU 2 causes the eyeglasses lens machining device 1 to roughly macine the peripheral edge of the lens LE in order to ablate an unnecessary portion of the lens LE (S3). For example, the CPU 2 generates machining control data for driving each member in the rough machining based on the eyeglass data acquired in step S1 and the lens shape data acquired in step S2. For example, rough machining control data is obtained such that the peripheral edge is ablated up to a predetermined distance (for example, 1 mm or the like) outward from the target lens shape data, and a finishing margin for the subsequent finishing is secured. For example, the CPU 2 controls the driving of the X-axis movement motor 145 based on the rough machining control data to position the lens LE on the plastic rough whetstone 167. Further, for example, the CPU 2 controls the driving of the Y-axis movement motor 150 while rotating the lens LE (lens holding shaft) by the motor 120. For example, the peripheral edge of the lens LE is roughly machined by rotating the lens LE a plurality of times.

For example, when the rough machining (S3) on the lens LE is completed, the CPU 2 outputs a machining end signal. For example, the CPU 2 causes the memory 5 to store that the rough machining has been performed once based on such a machining end signal.

Next, the CPU 2 finish the peripheral edge of the lens LE to form a bevel for fitting the lens LE into the eyeglass frame (S4). For example, the CPU 2 generates bevel machining control data for driving each member in the bevel machining based on the eyeglass data acquired in step S1 and the lens shape data acquired in step S2 (for details, see JPH05-212661A and the like). For example, the CPU 2 controls the driving of the X-axis movement motor 145 based on the bevel machining control data to position the lens LE on a V groove (bevel groove) of the finishing whetstone 164. Further, for example, the CPU controls driving of the Y-axis movement motor 150. For example, the peripheral edge of the lens LE is subjected to bevel machining by rotating the lens LE a plurality of times.

For example, when finishing (S4) on the lens LE is completed, the CPU 2 outputs a machining end signal. For example, the CPU 2 causes the memory 5 to store that the bevel machining has been performed once based on such a machining end signal.

In the eyeglasses lens machining device 1 according to the example, the number of times that the lens LE has been machined is measured every time the peripheral edge of the lens LE is machined. For example, in response to a machining start signal generated every time the machining of one lens LE is started, the number of times the lens LE has been machined is incremented by one count, and is recorded in the memory 5. In other words, the number of lenses LE machined by the eyeglasses lens machining device 1 is recorded in the memory 5.

Further, in the eyeglasses lens machining device 1 according to the example, for each machining process when machining the peripheral edge of the lens LE, the number of times that the machining process is performed is measured. For example, in response to a machining end signal generated every time each machining process is completed, the number of times the lens LE has been machined using each whetstone is incremented by one count, and is recorded in the memory 5. In other words, the number of lenses LE machined by each whetstone is recorded in the memory 5. The number of lenses LE machined by the eyeglasses lens machining device 1 and the number of lenses LE machined by each whetstone do not necessarily match. This is because the whetstone to be used varies depending on the machining conditions of the lens LE.

### <Replacement Time of Consumable Item>

There are times when a user wants to check when the current consumable items used in the eyeglasses lens machining device 1 need to be replaced. For example, in this case, the user operates the display unit 7 and presses a button (not shown) for grasping the replacement time of the consumable items. For example, the CPU 2 displays a maintenance screen 500 on the display unit 7 based on an input signal from the display unit 7. For example, the maintenance screen 500 is a screen for displaying a status related to maintenance of the eyeglasses lens machining device 1.

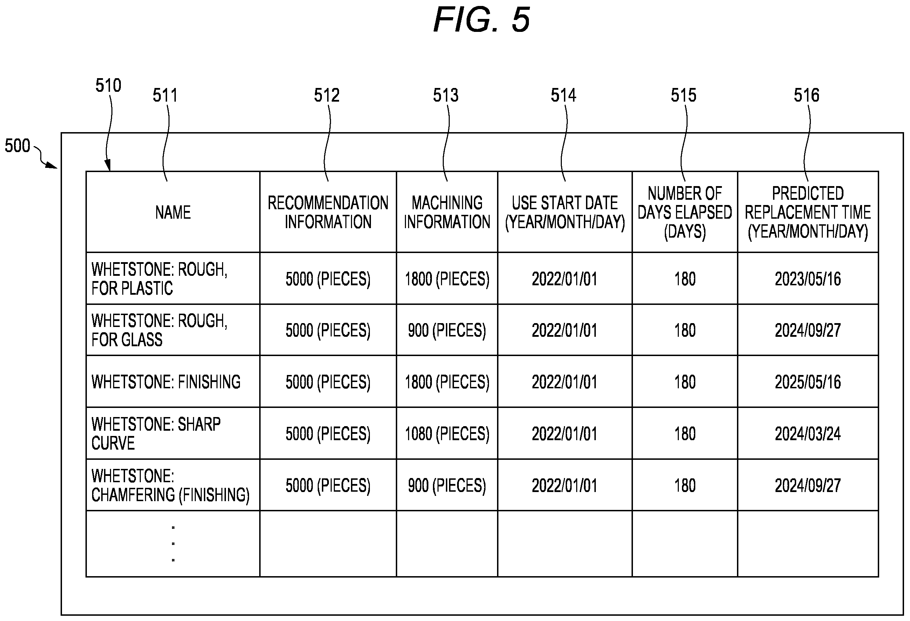

FIG. 5 is an example of the maintenance screen 500. The maintenance screen 500 includes the consumable item list 510 and the like. The consumable item list 510 is a list in which various statuses are associated with the consumable items included in the eyeglasses lens machining device 1. For example, the consumable item list 510 includes fields of name 511, recommendation information 512, machining information 513, use start date 514, number of days elapsed 515, predicted replacement time 516, and the like.

For example, the name 511 is a name of a consumable item used in the eyeglasses lens machining device 1. For example, in the example, names of all the consumable items are listed and displayed. Alternatively, each name of the consumable items may be switched between display and hidden. For example, the recommendation information 512 is information serving as a guide for recommending replacement of a consumable item. For example, the recommendation information 512 may be information indicating a guide for how long a consumable item can be used without problems. In the example, the recommendation information 512 may be displayed as a guide of the limit number of lenses LE to be machined by each consumable item that can be machined by each consumable item. For example, the machining information 513 is information on machining of the lens LE by a consumable item. For example, the machining information 513 may be a sum of the number of the lenses LE machined by the consumable item. For example, the use start date 514 is a date when the use of the consumable item is started. For example, the date input by the user from the date and time setting screen 520 is displayed. For example, the number of days elapsed 515 is the number of days from the start of use of the consumable item until the present. For example, the predicted replacement time 516 is a date predicted as the replacement time of the consumable item.

For example, when transitioning the screen of the display unit 7 to the maintenance screen 500, the CPU 2 acquires the predicted replacement time 516 of each consumable item by processing various data related to each consumable item, and displays the predicted replacement time 516 in the consumable item list 510. For example, the predicted replacement time 516 of the consumable item is calculated based on period information indicating a predetermined period during which the consumable item is used, the machining information 513 on machining of the lens LE in the predetermined period, and the recommendation information 512 that recommends replacement of the consumable item. Hereinafter, the acquisition of the predicted replacement time 516 of the plastic rough whetstone 167 will be described in detail using the plastic rough whetstone 167 as an example of the consumable item.

### <Acquisition of Period Information>

First, the CPU 2 acquires a predetermined period during which the plastic rough whetstone 167 is used. For example, the CPU 2 acquires the number of days from the start of use of the plastic rough whetstone 167 to the present as the predetermined period. For example, the CPU 2 retrieves from the memory 5 to acquire the use start date of the plastic rough whetstone 167 set in advance by the user. Further, for example, the CPU 2 acquires a current date by a timing mechanism (not illustrated) provided in the eyeglasses lens machining device 1. Further, for example, the CPU 2 acquires the number of days elapsed in which the plastic rough whetstone 167 has been used based on the use start date and the current date. The numbers of elapsed days calculated in this way are displayed in the number of days elapsed 515 of the maintenance screen 500.

For example, when the use start date of the plastic rough whetstone 167 is 2022/01/01 (January 1, 2022) and the current date is 2022/06/30 (June 30, 2022), the number of days elapsed during which the plastic rough whetstone 167 has been used is "180".

### <Acquisition of Machining Information>

Next, the CPU 2 acquires machining information on machining of the lens LE using the plastic rough whetstone 167 in the predetermined period (here, the number of days elapsed). For example, the CPU 2 acquires, as the machining information, a total number of lenses LE machined by the plastic rough whetstone 167 from the start of use of the plastic rough whetstone 167 to the present. For example, in the example, the number of times that the rough machining is performed using the plastic rough whetstone 167 is recorded in the memory 5. For example, the number of times of rough machining by the plastic rough whetstone 167 can be considered as the number of lenses LE machined by the plastic rough whetstone 167. Therefore, the CPU 2 can acquire the total number of lenses LE machined by the plastic rough whetstone 167 by retrieving the number of times of rough machining by the plastic rough whetstone 167 from the memory 5. The machining information obtained in this way is displayed in the machining information 513 of the maintenance screen 500.

For example, in the example, it is assumed that the number of times that the rough machining is performed using the plastic rough whetstone 167 is acquired as "1800 times". That is, it is assumed that the total number of lenses LE machined by the plastic rough whetstone 167 is "1800".

### <Acquisition of Recommendation Information>

Next, the CPU 2 acquires the recommendation information for recommending replacement of the plastic rough whetstone 167. For example, the CPU 2 acquires, as the recommendation information, the limit number of lenses LE to be machined by the plastic rough whetstone 167 that can be machined by the plastic rough whetstone 167. As an example, the limit number of machined lenses may be set in advance based on an experiment or simulation using a plastic rough whetstone. In addition, as an example, a total number of lenses LE machined by the plastic rough whetstone used in the past in the eyeglasses lens machining device 1 may be set in advance. More specifically, a total number of lenses LE machined by a past plastic whetstone during a period from the start of the use of the past plastic whetstone to the replacement may be set in advance. Therefore, the CPU 2 retrieves from the memory 5 to acquire the limit number of lenses LE to be machined by the plastic rough whetstone 167. The recommendation information obtained in this way is displayed in the recommendation information 512 of the maintenance screen 500.

For example, in the example, it is assumed that the limit number of lenses LE to be machined by the plastic rough whetstone 167 is acquired as "5000" which is an initial setting at the time of shipment.

### <Acquisition of Predicted Replacement Time>

When the CPU 2 acquires the period information (number of days elapsed 515), the machining information 513, and the recommendation information 512 for the plastic rough whetstone 167, the CPU 2 acquires a predicted replacement time for replacing the plastic rough whetstone 167. For example, the CPU 2 calculates the actual usage information of the plastic rough whetstone 167 based on the period information and the machining information of the plastic rough whetstone 167. For example, the actual usage information of the plastic rough whetstone 167 may be the frequency of use of the plastic rough whetstone 167. For example, the actual usage information of the plastic rough whetstone 167 is represented by machining information per unit period of the plastic rough whetstone 167. For example, in the example, it is represented in terms of the number of lenses LE machined per day. That is, in the example, the use frequency of the plastic rough whetstone 167 is represented by the number of lenses LE machined per day.

For example, the CPU 2 calculates the number of lenses LE machined per day based on the number of days elapsed during which the plastic rough whetstone 167 is used and a total number of lenses LE machined by the plastic rough whetstone 167. In the example, since the number of days elapsed during which the plastic rough whetstone 167 is used is 180 days and the number of lenses LE machined by the plastic rough whetstone 167 is 1800, by dividing the number of lenses machined by the number of days elapsed, the actual usage information is calculated to be "10 pieces/day". For example, since the operation status of the eyeglasses lens machining device 1 (the number of lenses LE machined, an operation time of the device, and the like) varies depending on the day, it is possible to more appropriately acquire a total number of days described later by obtaining the averaged usage information.

Subsequently, the CPU 2 calculates the total number of days from the start of use of the plastic rough whetstone 167 to the replacement of the plastic rough whetstone 167 based on the recommendation information 512 and the actual usage information for the plastic rough whetstone 167. For example, by using the actual usage information of the plastic rough whetstone 167, the use frequency of the plastic rough whetstone 167 at the current time is reflected, and the CPU 2 calculates the total number of days from the start of use to the replacement of the plastic rough whetstone 167. For example, if the use frequency of the plastic rough whetstone 167 is high, the total number of days from the start of use to the replacement is calculated to be small. For example, if the use frequency of the plastic rough whetstone 167 is low, the total number of days from the start of use to the replacement is calculated to be large. In the example, since the recommendation information of the plastic rough whetstone 167 is 5000 pieces and the actual usage information of the plastic rough whetstone 167 is 10 pieces/day, by dividing the recommendation information by the actual usage information, the total number of days is calculated to be "500 days".

Further, the CPU 2 acquires the predicted replacement time of the plastic rough whetstone 167 based on the use start date and the total number of days for the plastic rough whetstone 167. As described above, the total number of days from the start of use to the replacement of the plastic rough whetstone 167 reflects the use frequency of the plastic rough whetstone 167. Therefore, for example, if the use frequency of the plastic rough whetstone 167 is high, the predicted replacement time is acquired as a date closer to the current time. Further, for example, if the use frequency of the plastic rough whetstone 167 is low, the predicted replacement time is acquired as a date farther from the current time. In the example, since the use start date of the plastic rough whetstone 167 is 2022/01/01 (January 1, 2022) and the total number of days until the plastic rough whetstone 167 is replaced is 500 days, by adding the total number of days to the use start date, the predicted replacement time is acquired to be "2023/05/16 (May 16, 2023)".

In the example, a configuration in which the predicted replacement time is acquired by calculating the actual usage information and the total number of days using the period information (number of days elapsed 515), the machining information 513, and the recommendation information 512 of the plastic rough whetstone 167 has been described as an example, but the present disclosure is not limited thereto. For example, the predicted replacement time may be directly acquired using the period information, the machining information 513, and the recommendation information 512 of the plastic rough whetstone 167. In this case, a calculation formula, a lookup table, or the like for acquiring the predicted replacement time may be created in advance and stored in the memory 5.

### <Output of Predicted Replacement Time>

The CPU 2 displays the predicted replacement time of the plastic rough whetstone 167 in the predicted replacement time 516 of the maintenance screen 500. For example, the predicted replacement time of "WHETSTONE: ROUGH, FOR PLASTIC" in the consumable item list 510 is displayed as "2023/05/16 (May 16, 2023)". Although the plastic rough whetstone 167 is exemplified above, the predicted replacement time is similarly displayed for other consumable items. For example, the user does not estimate the status of each consumable item from the operation status of the eyeglasses lens machining device, but by checking the maintenance screen 500, the predicted replacement time of each consumable item can be appropriately grasped. For example, by appropriately grasping the predicted replacement time of each consumable item, it is possible to prepare a spare consumable item in advance and adjust the operating status of the device.

For example, when the consumable item is replaced, the user changes the use start date 514 of the consumable item list 510 (see FIG. 5). For example, the date and time setting screen 520 (see FIG. 3) can be retrieved by pressing and holding the field of use start date corresponding to each consumable item. The CPU 2 changes the use start date 514 according to an input signal from the date and time setting button 522 of the date and time setting screen 520. The CPU 2 may reset the machining information 513, the number of days elapsed 515, the predicted replacement time 516, and the like in response to the change of the use start date 514. For example, in the example, a plurality of whetstones are attached to the whetstone rotation shaft 161a in the peripheral edge machining tool 168, and these whetstones can be individually replaced. Therefore, for example, when only the plastic rough whetstone 167 is replaced, the use start date 514 corresponding to "WHETSTONE: ROUGH, FOR PLASTIC" may be changed. When the change in the use start date 514 corresponding to "WHETSTONE: ROUGH, FOR PLASTIC" is detected, the CPU 2 may reset the machining information 513, the number of days elapsed 515, the predicted replacement time 516, and the like corresponding to "WHETSTONE: ROUGH, FOR PLASTIC".

As described above, for example, an eyeglasses lens machining device according to the example includes: a period information acquisition unit configured to acquire period information indicating a predetermined period during which a consumable item is used; a machining information acquisition unit configured to acquire machining information on machining of an eyeglasses lens by the eyeglasses lens machining device in the predetermined period; a recommendation information acquisition unit configured to acquire recommendation information for recommending replacement of the consumable item; a prediction unit configured to predict a replacement time to replace the consumable item based on the period information acquired by the period information acquisition unit, the machining information acquired by the machining information acquisition unit, and the recommendation information acquired by the recommendation information acquisition unit; and an output unit configured to output a prediction result predicted by the prediction unit. For example, since the operation status of the eyeglasses lens machining device (the number of eyeglasses lenses machined, the operation time of the device, and the like) differs depending on an eyeglass store or the like, the replacement time of the consumable item may change. For example, when the eyeglasses lens machining device is frequently used, the wear of the consumable item is fast (as an example, when the consumable item is a whetstone, the more eyeglasses lenses are machined, the faster the whetstone wears out). However, when the eyeglasses lens machining device is not used so much, the wear of the consumable item is slow (as an example, the whetstone wears out slowly). Therefore, even if the two same consumable items have the same consumption degree, the replacement time of the frequently used consumable item comes earlier. For this reason, for example, by predicting and outputting the replacement time of the consumable item in consideration of the operation status of the eyeglasses lens machining device, the user can easily grasp the appropriate replacement time of the consumable item. Therefore, the user can maintain the consumable item at an appropriate timing.

Further, for example, in the eyeglasses lens machining device according to the example, the period information acquisition unit acquires, as the period information, first period information indicating a first period for a consumable item being used in the eyeglasses lens machining device, and the machining information acquisition unit acquires, as the machining information, first machining information on machining of the eyeglasses lens in the first period. As a result, for example, the replacement time for replacing the currently used consumable item can be accurately predicted in consideration of the operation status of the currently used consumable item. For example, by acquiring the machining information on machining of the eyeglasses lens in the predetermined period by the whetstone being used in the eyeglasses lens machining device, it is possible to accurately predict the replacement time based on the operation status of the whetstone.

Further, for example, in the eyeglasses lens machining device according to the example, the consumable item is a plurality of whetstones, and the machining information acquisition unit acquires the machining information on machining of the eyeglasses lens by the plurality of whetstones in the predetermined period, which is the machining information for each machining process of the eyeglasses lens. For example, a whetstone to be used varies depending on a machining process of machining an eyeglasses lens (for example, rough machining, finishing, chamfering, mirror finishing, or the like). Therefore, it is possible to easily acquire the machining information for each whetstone by acquiring the machining information for each machining process of the eyeglasses lens instead of simply acquiring the machining information of the eyeglasses lens. Therefore, the replacement time for each whetstone can be easily acquired.

Further, for example, in the eyeglasses lens machining device according to the example, the period information acquisition unit acquires, for each of the whetstones, the period information indicating a predetermined period during which the plurality of whetstones are used in the eyeglasses lens machining device, the machining information acquisition unit acquires, for each of the whetstones, machining information on machining of the eyeglasses lens by the whetstones in the predetermined period, and the prediction unit predicts the replacement time for each of the whetstones based on the period information for each of the whetstones, the machining information for each of the whetstones, and the recommendation information. Accordingly, it is possible to easily acquire the replacement time of each whetstone based on the operation status of each whetstone. Among the plurality of whetstones, the more frequently used one is predicted to be replaced sooner. Therefore, for example, in a case where a plurality of whetstones are integrally formed, the same whetstone (whetstone group) can be used for a long period of time by, for example, limiting the use of whetstones whose replacement time is early as much as possible. In addition, for example, in a case where a plurality of whetstones can be individually replaced, it is possible to prepare for future replacement of the whetstones by preparing a spare whetstone in advance for those with early replacement time.

### <Modifications>

In the example, the configuration in which the number of days elapsed from the use start date to the present of the consumable item being used in the eyeglasses lens machining device 1 is acquired as the predetermined period (first period information) of the consumable item has been described as an example, but the present disclosure is not limited thereto. For example, a configuration may be adopted in which a predetermined number of days (for example, 15 days or the like) included from the use start date to the present of the consumable item being used in the eyeglasses lens machining device 1 is acquired. In addition, for example, a configuration may be adopted in which the number of days elapsed from the use start date to the replacement or a predetermined number of days included from the use start date to the replacement of a consumable item replaced in the past in the eyeglasses lens machining device 1 is acquired. The predetermined period of the consumable item may be acquired in units of at least one of year, month, week, hour, minute, and the like instead of units of days.

For example, when a predetermined period (second period information) for a consumable item replaced in the past in the eyeglasses lens machining device 1 is acquired, machining information (second machining information) on machining of the eyeglasses lens in the second period may be acquired. As an example, in a case where the number of days elapsed from the use start date to the replacement of the past consumable item is acquired as the second period information, the number of eyeglasses lenses machined by the past consumable item from the use start date to the replacement of the past consumable item may be acquired as the second machining information. In addition, as an example, in a case where a predetermined number of days elapsed included from the use start date to the replacement of the past consumable item is acquired as the second period information, the number of eyeglasses lenses machined by the past consumable item within the predetermined number of days elapsed may be acquired as the second machining information. Of course, the number of times of machining of the eyeglasses lens or the like may be acquired as the second machining information.

For example, as described above, in the eyeglasses lens machining device according to the example, the period information acquisition unit acquires, as the period information, second period information indicating a second period for a consumable item replaced in the past in the eyeglasses lens machining device, and the machining information acquisition unit acquires, as the machining information, second machining information on machining of the eyeglasses lens in the second period. As a result, for example, it is possible to easily grasp the tendency of the replacement time of the consumable item in consideration of the operation status of the consumable item replaced in the past. For example, by acquiring the machining information on machining of the eyeglasses lens in the predetermined period by the whetstone replaced in the past in the eyeglasses lens machining device, it is possible to easily grasp the tendency of the replacement time of the whetstone based on the operation status of the whetstone.

In the example, the configuration in which the use of each whetstone is detected by counting the number of times of machining by each whetstone corresponding to a machining process of the lens LE has been described as an example, but the present disclosure is not limited thereto. For example, the machining process of the lens LE includes use of a consumable item different from the whetstone. As an example, in the rough machining using the plastic rough whetstone 167, in addition to the plastic rough whetstone 167, the motor 160 that rotates the whetstone rotation shaft 161a, the activated carbon material of the deodorizing device 9, and the like are used. Therefore, the CPU 2 may receive a machining end signal generated every time the rough machining of the lens LE is ended, add the number of times of using the plastic rough whetstone 167, the motor 160, the activated carbon material, and the like by one count, and record the result in the memory 5.

In the example, the configuration in which the number of lenses LE machined by each whetstone is acquired as the machining information based on the machining end signal generated every time the machining process of the lens LE ends has been described as an example, but the present disclosure is not limited thereto. For example, a configuration may be adopted in which the machining information is acquired based on a drive signal generated by driving the motor 160 or the like to perform a predetermined machining process on the lens LE. Further, for example, a configuration may be adopted in which the machining information is acquired by using an energization record of the motor 160 or the like. Note that such machining information of the whetstone is not limited to information represented as the number of machined lenses LE, and may be represented as a machining time based on a grinding time during which the lens LE is ground by the whetstone, an energization time of the motor 160 for rotating the whetstone, and the like.

In the example, a configuration in which the recommendation information 512 serving as a guide for replacement of each consumable item is set in advance at the time of shipment of the eyeglasses lens machining device 1 has been described as an example, but the present disclosure is not limited thereto. For example, the recommendation information 512 may be changed to any value based on the operation status and the like of the eyeglasses lens machining device 1. For example, the machining frequency of the lens LE using the eyeglasses lens machining device 1, the operation time of the eyeglasses lens machining device 1, and the like are different depending on an eyeglass store or the like. For this reason, the user may be able to change the recommendation information 512 as necessary based on the replacement frequency of the consumable item according to the eyeglass store or the like. Accordingly, since the predicted replacement time of the consumable item reflecting the operation status of the eyeglasses lens machining device 1 is calculated, the consumable item can be used in a more appropriate period. Of course, the CPU 2 may automatically calculate and change the recommendation information 512 based on the operation status or the like of the eyeglasses lens machining device 1.

Note that the recommendation information 512 in the eyeglasses lens machining device 1 may be set based on the number of times (or the number of pieces) the eyeglasses lens is machined by a consumable item replaced in the past in the eyeglasses lens machining device 1. For example, in this case, the number of times of machining of the eyeglasses lens from the start of use until the replacement of the past consumable item may be automatically set as the recommendation information 512. A number of times obtained by adding or subtracting a predetermined number of times to or from the number of times of machining of the eyeglasses lens from the start of use until the replacement of the past consumable item may be automatically set as the recommendation information 512. Of course, the number of times of machining of the eyeglasses lens by the past consumable item or the number of times obtained by adding or subtracting a predetermined number of times to or from the number of times of machining of the eyeglasses lens may be manually set.

For example, as described above, in the eyeglasses lens machining device according to the example, the recommendation information acquisition unit acquires the recommendation information based on the second machining information acquired by the machining information acquisition unit. For example, the machining information on machining of the eyeglasses lens within a predetermined period by a consumable item replaced in the past in the eyeglasses lens machining device is machining information based on the fact of the consumable item. For example, by using the machining information based on such a fact to acquire the recommendation information for recommending the replacement of the consumable item, it is possible to predict the appropriate replacement time of the consumable item. More specifically, for example, by acquiring the machining information on machining of the eyeglasses lens from when the use of the past whetstone is started to the replacement of the whetstone, the appropriate replacement time of the whetstone can be predicted.

In the example, the configuration in which the plurality of whetstones included in the peripheral edge machining tool 168 can be individually replaced has been described as an example, but the present disclosure is not limited thereto. For example, a configuration may be adopted in which the plurality of whetstones included in the peripheral edge machining tool 168 is integrally replaced. For example, a whetstone in which a plurality of whetstones are integrally formed may be attached to the whetstone rotation shaft 161a. For example, the plurality of whetstones may be fixed to the whetstone rotation shaft 161a separately. In this case, when one whetstone of the peripheral edge machining tool 168 is worn or the like and cannot be used (that is, the lens LE cannot be machined), it is necessary to replace the entire peripheral edge machining tool 168. However, since the whetstones other than the whetstone that requires replacement can be continuously used, the peripheral edge machining tool 168 can be used to the limit by taking measures such as refraining from using the whetstone that requires replacement. That is, by calculating and displaying the predicted replacement time for each whetstone, the peripheral edge machining tool 168 can be continuously used until replacement of all the whetstones is required.

In the example, the configuration in which the replacement time of the consumable item being used is predicted by acquiring the first period information and the first machining information of the consumable item being used in the eyeglasses lens machining device 1 has been described as an example, but the present disclosure is not limited thereto. For example, in the example, a configuration may be adopted in which the replacement time of the consumable item being used may be predicted by acquiring the second period information and the second machining information of the consumable item replaced in the past in the eyeglasses lens machining device 1. As an example, the actual usage information of the past plastic rough whetstone 167 may be obtained based on a predetermined period (second period information) from the start of use to the replacement of the past plastic rough whetstone 167 and the number of eyeglasses lenses machined by the plastic rough whetstone 167 (second machining information). Further, the replacement time until the recommendation information is reached may be predicted by comparing a predetermined period (first period information) from the start of use of the plastic rough whetstone 167 currently in use with the actual usage information. Alternatively, the replacement time until the recommendation information is reached may be predicted by comparing the number of eyeglasses lenses (second machining information) machined by the plastic rough whetstone 167 currently in use with the actual usage information.

For example, as described above, in the eyeglasses lens machining device according to the present example, the prediction unit predicts, based on the second period information, the second machining information, the recommendation information, and at least one of the first period information or the first machining information, the replacement time in consideration of the actual usage information of the consumable item replaced in the past in the eyeglasses lens machining device. As a result, for example, the replacement time for replacing the currently used consumable item can be accurately predicted in consideration of the operation status of the consumable item replaced in the past. As an example, based on the machining information on machining of the eyeglasses lens in the predetermined period by the whetstone replaced in the past in the eyeglasses lens machining device, it is possible to easily grasp the tendency of the replacement time of the whetstone based on the operation status of the past whetstone. Therefore, by taking into account the predetermined period during which the whetstone being used in the eyeglasses lens machining device is used, it is possible to accurately predict the replacement time of the whetstone currently being used. Alternatively, by taking into account the machining information within the predetermined period by the whetstone being used in the eyeglasses lens machining device, it is possible to accurately predict the replacement time of the whetstone currently being used.

In the example, the configuration in which the predicted replacement time 516 is output based on the period information (number of days elapsed 515), the machining information 513, and the recommendation information 512 of each consumable item has been described as an example, but the present disclosure is not limited thereto. For example, when the use frequency of each consumable item is low, the replacement is not performed for a long period, and therefore there is a possibility that the machining accuracy of the lens LE decreases due to deterioration of each consumable item over time. Therefore, for example, the predicted replacement time for each consumable item may be compared with the replacement time based on the service life of each consumable item, and a date with an earlier replacement time (in other words, an earlier replacement time) may be output as the predicted replacement time 516 of each consumable item. The replacement time based on the service life of each consumable item may be set in advance in consideration of deterioration over time or the like.

More specifically, for example, the replacement time based on the service life of the plastic rough whetstone 167 may be set to five years after the use start date. That is, in the example described above, the replacement time based on the service life may be set to 2027/01/01 (January 1, 2027), five years after 2022/01/01 (January 1, 2022), which is the use start date of the plastic rough whetstone 167. For example, the CPU 2 calculates the predicted replacement time 516 (here, 2023/05/16 (May 16, 2023)) of the plastic rough whetstone 167 when transitioning to the maintenance screen 500, and displays the predicted replacement time when the predicted replacement time is earlier than the replacement time based on the service life (here, 2027/01/01 (January 1, 2027)), and displays the replacement time based on the service life when the predicted replacement time is later than the replacement time based on the service life. For example, as described above, by comparing the predicted replacement time based on the period information, the machining information, and the recommendation information of the consumable item with the replacement time based on the service life and displaying either one, it is possible to allow the user to grasp a more appropriate replacement time of the consumable item.

In the example, the configuration in which the predicted replacement time 516 of each consumable item is displayed in the maintenance screen 500 has been described as an example, but the present disclosure is not limited thereto. For example, together with the predicted replacement time 516 of each consumable item, the consumption degree of each consumable item (the percentage of how much the consumable item has been used) may be displayed.

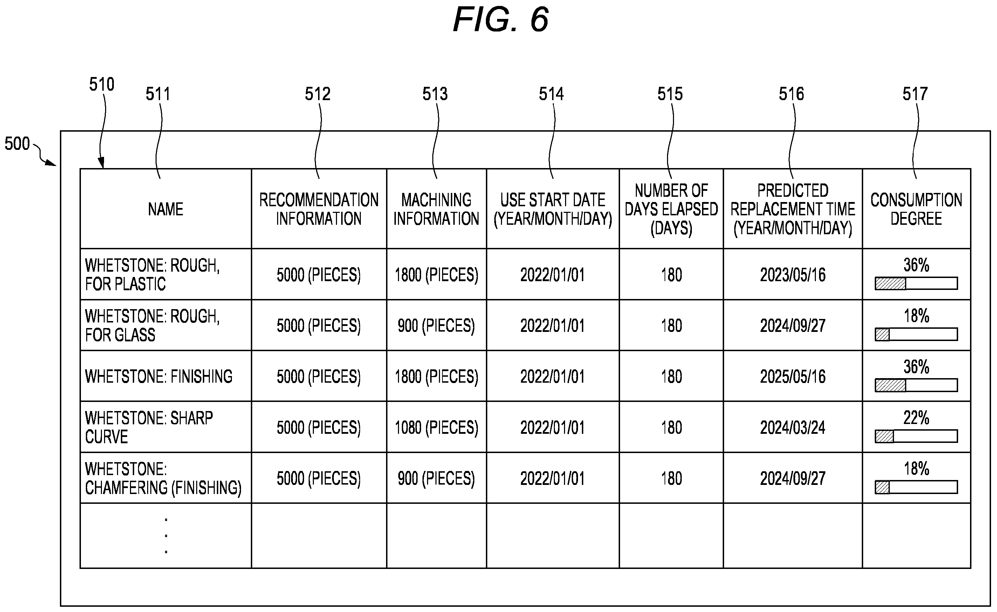

FIG. 6 is an example of the maintenance screen on which the consumption degree of the consumable item is displayed. For example, the consumption degree 517 displays the consumption degree of each consumable item as a percentage and a graph. For example, the consumption degree of the consumable item can be acquired based on the machining information 513 and the recommendation information 512. For example, in the example, since the machining information 513 of "WHETSTONE: ROUGH, FOR PLASTIC" is 1800 pieces and the recommendation information 512 is 5000 pieces, a value obtained by dividing the machining information 513 by the recommendation information 512 is displayed as a percentage (%), and 36% is acquired as the consumption degree of the plastic rough whetstone 167. Accordingly, the predicted replacement time can be output in a more understandable manner.

In the example, a configuration in which the predicted replacement time 516 is displayed in the consumable item list 510 of the maintenance screen 500 to allow the user to grasp the replacement time of the consumable item has been described as an example, but the present disclosure is not limited thereto. For example, when the predicted replacement time of the consumable item approaches, the CPU 2 may output an alert for prompting replacement of the consumable item to the display unit 7. More specifically, for example, when it is detected that the current date approaches the predicted replacement time 516 of each consumable item, the CPU 2 may output an alert (for example, a pop-up message, an alert mark, or the like) to the display unit 7 when the eyeglasses lens machining device 1 is activated. For example, the number of days that the current date is considered to be close to the predicted replacement time 516 may be set to any number of days (for example, 14 days) in advance.

In the case of the above-described example, the total number of days from the start of use to the replacement of the plastic rough whetstone 167 is 500 days. For example, the number of days that the current date is considered to be close to the predicted replacement time 516 is set to 14 days (that is, two weeks). In this case, when the CPU 2 detects that 486 days have elapsed from the use start date of the plastic rough whetstone 167, the CPU 2 outputs an alert. For example, an alert mark may be displayed in the field of the predicted replacement time of the consumable item list 510, or a date indicating the predicted replacement time may be highlighted (for example, bold, underlined, or changed in character color).

Such an alert is not limited to being displayed on the display unit 7. For example, the alert may be output by at least one of lighting or blinking of a lamp, issuing a voice announcement, printing a message or transferring the message to an external device, and the like. That is, the alert may be configured to warn the user that the replacement time of the consumable item is approaching. As a result, the user can check the predicted replacement time of the consumable item based on the alert and prepare a spare consumable item as necessary, so that the consumable item can be smoothly replaced.

Further, for example, when the consumption degree of the consumable item approaches 100%, the CPU 2 may output an alert for prompting replacement of the consumable item to the display unit 7. For example, the CPU 2 may output a first alert when the consumption degree of the consumable item exceeds 90%, and may output a second alert different from the first alert when the consumption degree reaches 100%.

In the example, the configuration in which various data related to each consumable item is processed at the timing of transition to the maintenance screen 500, and the predicted replacement time 516 is displayed in the consumable item list 510 has been described as an example, but the present disclosure is not limited thereto. For example, the CPU 2 may process various data at a predetermined timing different from the transition to the maintenance screen 500. As an example, the timing may be when the eyeglasses lens machining device 1 is started, or at a preset date and time or day of the week. Further, for example, the CPU 2 may process various data related to each consumable item every time the number of times each machining process for the lens LE has been performed is counted by one.

### REFERENCE SIGNS LIST

1 eyeglasses lens machining device
2 CPU
7 display unit
9 deodorizing device
100 subjective optometry device
167 plastic rough whetstone

## Claims

1. An eyeglasses lens machining device that machines a peripheral edge of an eyeglasses lens, the eyeglasses lens machining device comprising:
a period information acquisition unit configured to acquire period information indicating a predetermined period during which a consumable item is used in the eyeglasses lens machining device;
a machining information acquisition unit configured to acquire machining information on machining of an eyeglasses lens by the eyeglasses lens machining device in the predetermined period;
a recommendation information acquisition unit configured to acquire recommendation information for recommending replacement of the consumable item;
a prediction unit configured to predict a replacement time to replace the consumable item based on the period information acquired by the period information acquisition unit, the machining information acquired by the machining information acquisition unit, and the recommendation information acquired by the recommendation information acquisition unit; and
an output unit configured to output a prediction result predicted by the prediction unit.

2. The eyeglasses lens machining device according to claim 1,
wherein the period information acquisition unit acquires, as the period information, first period information indicating a first period for a consumable item being used in the eyeglasses lens machining device, and
wherein the machining information acquisition unit acquires, as the machining information, first machining information on machining of the eyeglasses lens in the first period.

3. The eyeglasses lens machining device according to claim 1 or 2,
wherein the period information acquisition unit acquires, as the period information, second period information indicating a second period for a consumable item replaced in a past in the eyeglasses lens machining device, and
wherein the machining information acquisition unit acquires, as the machining information, second machining information on machining of the eyeglasses lens in the second period.

4. The eyeglasses lens machining device according to claim 3,
wherein the recommendation information acquisition unit acquires the recommendation information based on the second machining information acquired by the machining information acquisition unit.

5. The eyeglasses lens machining device according to claim 3 or 4,
wherein the prediction unit predicts, based on the second period information, the second machining information, the recommendation information, and at least one of the first period information or the first machining information, the replacement time in consideration of actual usage information of the consumable item replaced in the past in the eyeglasses lens machining device.

6. The eyeglasses lens machining device according to any one of claims 1 to 5,
wherein the consumable item is a plurality of whetstones, and
wherein the machining information acquisition unit acquires the machining information on machining of the eyeglasses lens by the plurality of whetstones in the predetermined period, which is the machining information for each machining process of the eyeglasses lens.

7. The eyeglasses lens machining device according to claim 6,
wherein the period information acquisition unit acquires, for each of the whetstones, the period information indicating a predetermined period during which the plurality of whetstones are used in the eyeglasses lens machining device,
wherein the machining information acquisition unit acquires, for each of the whetstones, machining information on machining of the eyeglasses lens by the whetstone in the predetermined period, and
wherein the prediction unit predicts the replacement time for each of the whetstones based on the period information for each of the whetstones, the machining information for each of the whetstones, and the recommendation information.

8. An eyeglasses lens machining program used in an eyeglasses lens machining device that machines a peripheral edge of an eyeglasses lens, the eyeglasses lens machining program causing the eyeglasses lens machining device, when executed by a processor of the eyeglasses lens machining device, to perform:
a period information acquisition step of acquiring period information indicating a predetermined period during which a consumable item is used in the eyeglasses lens machining device;
a machining information acquisition step of acquiring machining information on machining of an eyeglasses lens by the eyeglasses lens machining device in the predetermined period;
a recommendation information acquisition step of acquiring recommendation information for recommending replacement of the consumable item;
a prediction step of predicting a replacement time to replace the consumable item based on the period information acquired in the period information acquisition step, the machining information acquired in the machining information acquisition step, and the recommendation information acquired in the recommendation information acquisition step; and
an output step of outputting a prediction result predicted in the prediction step.
